# EUROPÄISCHE PATENTSCHRIFT

(11) **EP 1 380 482 B1**
(45) Veröffentlichungstag und Bekanntmachung des Hinweises auf die Patenterteilung: **26.10.2005**
(21) Anmeldenummer: 02015217.9
(22) Anmeldetag: 09.07.2002
(51) Int. Cl.: B60S 3/06, B60S 3/04

(54) **Portalwaschvorrichtung für Fahrzeuge**
Washing gantry for vehicles
Portique de lavage pour véhicules

(43) Veröffentlichungstag der Anmeldung: 14.01.2004
(73) Patentinhaber: WashTec Holding GmbH, 86153 Augsburg (DE)
(72) Erfinder: Decker, Wolfgang, 86441 Zusmarshausen-Wollbach (DE)
(74) Vertreter: Schwarz, Thomas

(56) Entgegenhaltungen:
- EP-A- 0 507 757
- EP-A- 0 700 814
- EP-A- 0 808 754
- EP-A- 0 987 156
- WO-A-01/85505

## Beschreibung

Die Erfindung betrifft eine Portalwaschvorrichtung für Fahrzeuge, insbesondere Kraftfahrzeuge, nach dem Oberbegriff des Anspruchs 1.

Aus der EP 0 987 156 A2 ist eine gattungsgemäße Portalwaschvorrichtung für Kraftfahrzeuge bekannt. Diese enthält zwei voneinander beabstandete Portale, wobei an dem in Verfahrrichtung hinteren Portal mehrere Waschbürsten und an dem in Verfahrrichtung vorderen Portal neben einer Auftragsvorrichtung für den Auftrag eines flüssigen oder schaumförmigen Reinigungsmittels auch eine Hochdruckeinrichtung mit einer heb- und absenkbaren Dachdüse 7 und zwei gesteuerten Seitendüsen angeordnet sind. Die dortigen Seitendüsen sind jedoch fest am vorderen Portal 2 angeordnet und dienen nur zur Reinigung der Seitenflächen des Fahrzeugs, jedoch nicht zur Reinigung der Front- und Heckpartie.

Es sind auch bereits bürstenlos arbeitende Waschanlagen bekannt, bei denen die zu reinigenden Fahrzeuge ausschließlich durch von oben und von der Seite auf das Fahrzeug gerichtete Hochdruckdüsen abgespritzt werden. Aus der EP 0 507 757 B1 ist eine derartige Waschanlage bekannt. Dort wird die Reinigung der horizontalen Fahrzeugflächen einschließlich der Front- und Heckscheibe mit Hilfe eines in der Höhe verstellbaren und um seine Längsachse drehbaren horizontalen Sprühbalkens durchgeführt. Auch die Reinigung der Front- und Heckflächen erfolgt durch den horizontalen Sprühbalken, der vor der Fahrzeugfront und hinter dem Fahrzeugheck entsprechend abgesenkt wird. Durch zusätzliche seitliche Sprühbalken wird ausschließlich eine Reinigung der Fahrzeugseitenflächen durchgeführt. Eine derartige Anlage ist jedoch speziell für die Hochdruckwäsche ausgelegt und es kann keine Bürstenreinigung durchgeführt werden.

Aufgabe der Erfindung ist es, eine Portalwaschvorrichtung der eingangs genannten Art zu schaffen, die neben einer Wäsche mit herkömmlichen Waschbürsten auch eine effektive bürstenlose Hochdruckwäsche ermöglicht.

Diese Aufgabe wird durch eine Portalwaschvorrichtung mit den Merkmalen des Anspruchs 1 gelöst. Zweckmäßige Ausgestaltungen und vorteilhafte Weiterbildungen der Erfindung sind in den Unteransprüchen angegeben.

Bei der erfindungsgemäßen Portalwaschvorrichtung kann der Kunde an ein und derselben Anlage ein konventionelles Bürstenwaschprogramm mit allen an sich bekannten Optionen, wie z.B. chemischer Vorwäsche, Wachs- und Pflegeprogramm usw., und/oder eine besonders effektive bürstenlose Hochdruckwäsche mit ggf. chemischer Vorwäsche durchführen lassen. Durch die an der Traverse der Portalanordnung quer zur Bewegungsrichtung verfahrbare seitliche Hochdruck-Wascheinrichtung können neben den Seitenflächen des Fahrzeuges auch dessen Front- und Heckflächen gewaschen werden, wodurch eine besonders lackschonende und effektive Hochdruckwäsche mit verbessertem Reinigungseffekt ermöglicht wird.

In einer besonders zweckmäßigen Ausgestaltung der Erfindung besteht die Portalanordnung aus zwei miteinander gekoppelten Portalen, von denen das eine zwei Seiten-Waschbürsten und das andere zwei seitliche Hochdruck-Wascheinrichtungen trägt. Dadurch ergibt sich eine besonders kompakte Bauweise, so daß eine derartige Portalwaschanlage in sämtliche Standardhallen eingebaut werden kann.

Die seitlichen Hochdruck-Wascheinrichtungen sind zweckmäßigerweise als mit Düsen versehene Hochdruckrohre ausgeführt, die um ihre Längsachse drehbar sind. Die Hochdruckrohre sind an Laufwagen angeordnet, die über eine horizontale Führung an der mindestens einen Traverse der Portalanordnung motorisch verschiebbar geführt sind.

Weitere Besonderheiten und Vorzüge der Erfindung ergeben sich aus der folgenden Beschreibung bevorzugter Ausführungsbeispiele anhand der Zeichnung. Es zeigen:
- **Figur 1**: ein erstes Ausführungsbeispiel einer Kombi-Portalwaschanlage in einer schematischen Seitenansicht;
- **Figur 2**: ein zweites Ausführungsbeispiel einer Kombi-Portalwaschanlage in einer schematischen Seitenansicht und
- **Figur 3**: die verschiedenen Phasen einer Hochdruckwäsche mit der in Figur 1 gezeigten Kombi-Portalwaschanlage in einer Seitenansicht und Draufsicht.

Die in der Zeichnung dargestellte Kombi-Portalwaschanlage zur Durchführung einer Bürsten- und/oder Hochdruckwäsche weist eine Portalanordnung mit zwei relativ zu einem Fahrzeug in dessen Längsrichtung verfahrbaren Portalen 1 und 2 auf. Die im wesentlichen baugleich ausgeführten Portale 1 und 2 enthalten jeweils zwei seitliche Stützen 3 und eine horizontal angeordnete Traverse 4. Sie sind vorzugsweise fest miteinander gekoppelt, so daß sie durch einen einzigen Antrieb gemeinsam miteinander verfahrbar sind. An den beiden Portalen 1 und 2 ist in an sich bekannter Weise jeweils eine um eine Horizontalachse motorisch drehbare und durch einen geeigneten Stellantrieb vertikal anheb- und absenkbare Horizontal-Waschbürste 5 bzw. 6 montiert. Die Portale 1 und 2 sind spiegelsymmetrisch zueinander angeordnet, so daß deren Rückseiten mit den Traversen 4 einander zugewandt sind.

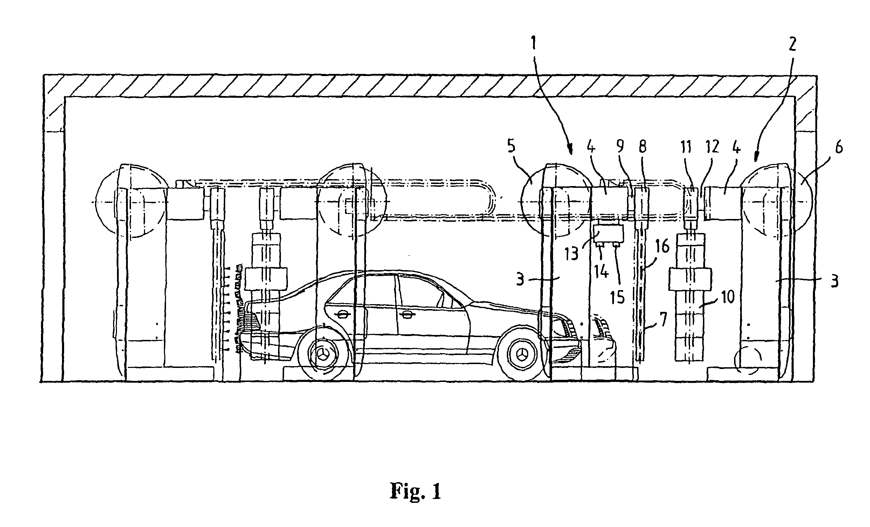

Bei der in Figur 1 dargestellten Ausführung sind an dem ersten Portal 1 zwei als vertikale Hochdruckrohre 7 ausgeführte seitliche Hochdruck-Wascheinrichtungen quer zur Bewegungsrichtung des Portal 1 verfahrbar geführt. Die beiden Hochdruckrohre 7 sind an zwei Laufwagen 8 angeordnet, die über eine horizontale Führung 9 quer zur Bewegungsrichtung 3 des Portals 1 verschiebbar an der Traverse 4 geführt sind. Die Verschiebung der beiden Laufwagen 9 erfolgt durch einen geeigneten Stellantrieb, der in der Zeichnung nicht dargestellt ist. Die horizontale Führung 9 für die beiden Laufwagen 8 ist derart ausgeführt, daß die beiden Hochdruckrohre 7 zumindest bis zur Mitte der Traverse 4 verfahrbar sind. Zweckmäßigerweise sind die beiden Laufwagen 8 der Hochdruckrohre 7 über die gesamte Länge der Traverse verfahrbar, um bei einer Front- und Heckwäsche mit den Hochdruckrohren 7 eine Überlappung zu erreichen. An der Traverse 4 des zweiten Portals 2 sind zwei Seiten-Waschbürsten 10 quer zur Bewegungsrichtung des Portals 2 verschiebbar geführt. Auch die Seiten-Waschbürsten 10 sind an zwei Laufwagen 11 angeordnet, die über eine horizontale Führung 12 quer zu Bewegungsrichtung des Portals durch einen Stellantrieb verfahrbar an der Traverse 4 des zweiten Portals 2 geführt sind.

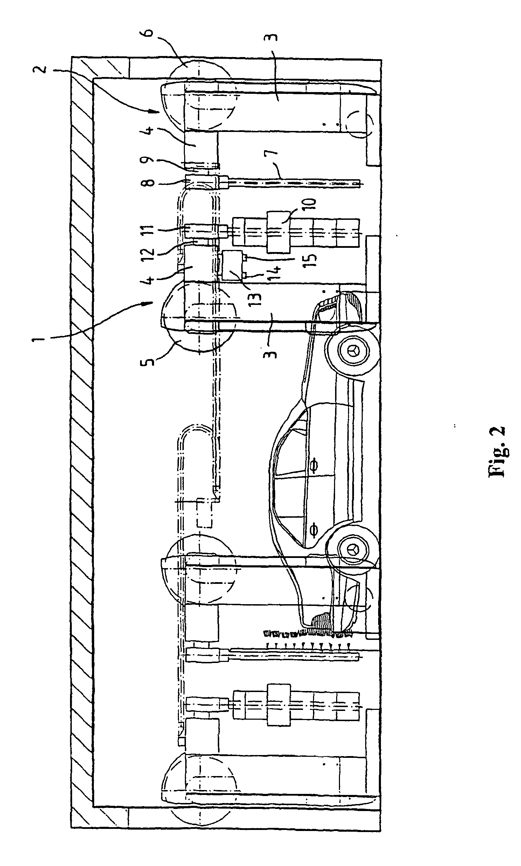

In der Ausführung von Figur 2 sind die beiden Hochdruckrohre 7 an der Traverse 4 des zweiten Portals 2 und die beiden Seiten-Waschbürsten 10 an der Traverse 4 des ersten Portals 1 verschiebbar montiert. Ansonsten ist die dort gezeigte Portalwaschanlage entsprechend der Ausführung von Figur 1 aufgebaut.

Wie aus den Figuren 1 und 2 hervorgeht, ist an zumindest einer Traverse 4 der beiden Portale 1 und 2 ein in der Höhe verstellbarer Querbalken 13 mit einer ebenfalls als Hochdruckrohr 14 ausgeführten horizontalen oberen Hochdruck-Wascheinrichtung und einer horizontalen Trocknungseinrichtung 15 angeordnet. Es können aber auch an beiden Traversen 4 der Portale 1 und 2 entsprechende höhenverstellbare Querbalken 13 vorgesehen sein, wobei dann an dem einen Querbalken ein horizontales Hochdruckrohr 14 und an dem anderen Querbalken eine z.B. als Trocknungsdüse ausgeführte Trocknungseinrichtung 15 angeordnet sind. Es sind aber auch zwei Querbalken 13 mit sowohl einem Hochdruckrohr 14 als auch einer Trocknungseinrichtung 15 möglich.

Das horizontale Hochdruckrohr 14 für die Hochdruckwäsche der oberen Fahrzeugbereiche, einschließlich der Motorhaube, des Kofferraums und der Windschutz- und Heckscheibe, und die beiden vertikalen Hochdruckrohre 7 für die Reinigung der Front-, Heck- und Seitenflächen des Fahrzeugs weisen geeignete seitliche Hochdruckdüsen 16 auf und sind durch einen entsprechenden Drehantrieb um ihre Längsachse drehbar. Dadurch kann der optimale Auftreffwinkel des Hochdruckstrahls auf die zu reinigenden Flächen eingestellt werden.

An den seitlichen Stützen 3 eines oder beider Portale 1 und 2 können außerdem - nicht dargestellte - Seitentrocknungsdüsen zum Trocknen der beiden Seitenflächen des Fahrzeuges vorgesehen sein. An den Portalen 1 und 2 können ferner auch Radwascheinrichtungen und/oder Auftragseinrichtungen für Wasch-, Spül-, Trocken- und/oder Konservierungsmittel oder dgl. angeordnet sein.

An der Portalanordnung oder an einer anderen geeigneten Stelle innerhalb einer Waschanlage ist eine Sensoranordnung zur Erfassung der Fahrzeugkontur angeordnet. Die Erfassung der Fahrzeugkontur kann z.B. durch berührende Sensoren in Form von Abtasteinrichtungen u.ä. oder durch berührungslos arbeitende Sensoren erfolgen. Eine berührungslose Erfassung der Fahrzeugkontur kann z.B. mit Hilfe von elektromagnetischen Wellen oder Schallwellen durch Lichtschranken, Ultraschallsensoren oder dgl. durchgeführt werden. In Abhängigkeit von den durch die Sensoranordnung ermittelten Informationen werden dann die Antriebe für das Portal, die Stellantriebe für die seitlichen Verfahrbewegungen der Hochdruckrohre 7 bzw. 14 und die Drehabtriebe für die Hochdruckrohre 7 und 14 derart angesteuert, daß die Hochdruckdüsen einen vorbestimmten Abstand und eine optimale Ausrichtung zu der entsprechenden Fahrzeugfläche und/oder aufweisen. Auch die Steuerung der Seiten-Waschbürsten 10 erfolgt auf der Grundlage der durch die Sensoranordnung erfaßten Daten.

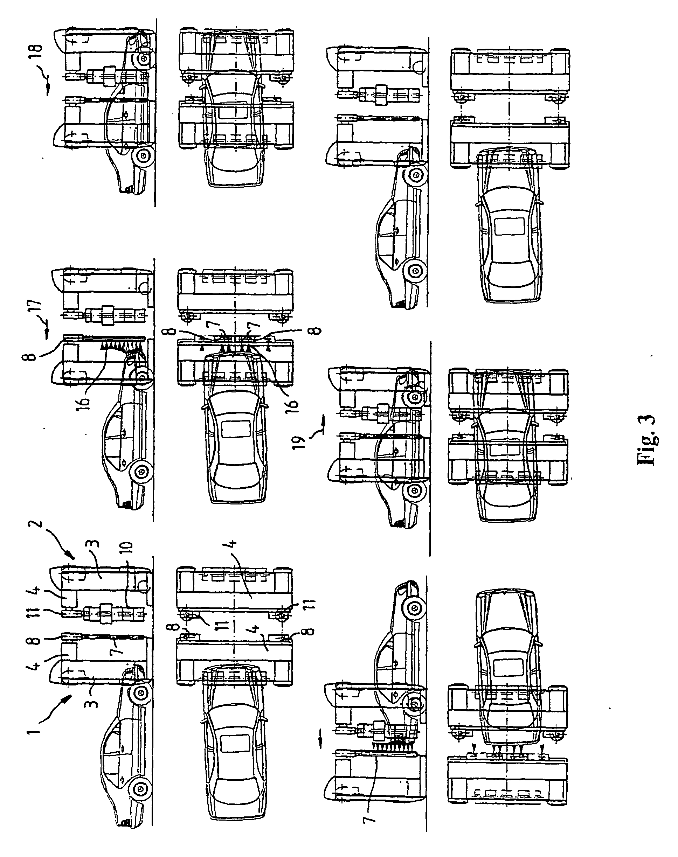

Anhand der Figur 3 wird im folgenden der Ablauf einer Hochdruckwäsche mit einer in Figur 1 gezeigten und vorstehend beschriebenen Kombi-Portalwaschanlage erläutert. In einer links oben dargestellten Ausgangsstellung sind die beiden Hochdruckrohre 7 in ihre äußeren Ruhestellungen verfahren und das erste Portal 1 derart angeordnet, daß sich die beiden Hochdruckrohre 7 in einem vorgegeben Abstand vor der Fahrzeugfront befinden. Die beiden Hochdruckrohre 7 werden dann zur Mitte der Traverse 4 verfahren und durch Bewegung der beiden Portale 1 und 2 in Richtung des Pfeils 17 bis zu einem vorgegebenen Abstand an die Fahrzeugfront angenähert, wie dies aus den daneben gezeigten oberen Darstellungen hervorgeht. Außerdem werden die beiden Hochdruckrohre 7 um ihre Längsachse so gedreht, daß die Hochdruckdüsen 16 auf die Fahrzeugfront gerichtet sind. Sobald die beiden Hochdruckrohre 7 den vorgegebenen Abstand von der Fahrzeugfront erreicht haben, wird die Bewegung der Portale 1 und 2 gestoppt und die beiden Hochdruckrohre 7 werden mit Hochdruckwasser versorgt. Beide Hochdruckrohre 7 werden dann durch entsprechende Verfahrbewegung der Laufwagen 8 zusammen auf eine Seite (nach links oder rechts) bewegt, um ein Überlappen an der Mittelsektion des Fahrzeugs zu erreichen. Dann kann das eine Hochdruckrohr 7 zur einen Seite weiterverfahren werden, während das andere Hochdruckrohr 7 reversiert und zur gegenüberliegenden Seite bewegt wird. Dann werden die beiden Hochdruckrohre 7 zur Reinigung der Seitenflächen um 90° gedreht. Gemäß der in Figur 3 rechts oben gezeigten Darstellung werden die beiden Portale 1 und 2 dann in Richtung des Pfeils 18 weiterverfahren, wobei die Hochdruckrohre 7 konturengesteuert an den Seitenflächen des Fahrzeugs entlangbewegt werden. Die Steuerung der Verfahrbewegungen wird auf der Grundlage der durch die Sensoreinrichtung durchgeführten Konturenerfassung durchgeführt. Dadurch kann gewährleistet werden, daß die Hochdruckdüsen 16 einen idealen Abstand und eine optimale Ausrichtung zu dem Fahrzeug aufweisen. Bei Erkennung des Fahrzeugshecks werden die beiden Hochdruckrohre 7 um 90° zum Heck gedreht, wie dies aus den links unten gezeigten Darstellungen in Figur 3 hervorgeht. Dann wird wie bei der vorstehend beschriebenen Frontwäsche eine entsprechende Heckwäsche mit Überlappung in der Mitte des Fahrzeugs durchgeführt. Anschließend werden die beiden Hochdruckrohre 7 in ihre äußere Ruhestellung zurückgefahren. Dann werden auch die beiden Portale 1 und 2 in Richtung des Pfeils 19 in ihre Ausgangsstellung zurückbewegt.

Gleichzeitig mit der Wäsche durch die seitlichen Hochdruckrohre 7 oder zeitversetzt während eines zusätzlichen Maschinenlaufs werden die horizontalen Flächen des Fahrzeugs einschließlich der Front- und Rückscheibe durch die Horizontaldüse 14 oder ein in die seitlichen Hochdruckdüsen integriertes horizontales Hochdruckrohr gereinigt.

Anstelle oder zusätzlich zur Hochdruckreinigung kann mit den beiden Horizontal-Waschbürsten und den beiden Seiten-Waschbürsten auch eine Bürstenwäsche in der an sich bekannten Weise durchgeführt werden.

Die Erfindung ist nicht auf das vorstehend beschriebene und in der Zeichnung dargestellte Ausführungsbeispiel beschränkt. So kann z.B. anstelle von zwei miteinander gekoppelten Portalen ein einziges größeres Portal verwendet werden, an dem die vorstehend beschriebenen Komponenten angeordnet sind. Anstelle von zwei seitlichen Hochdruck-Wascheinrichtungen kann auch nur eine seitliche Hochdruckeinrichtung vorgesehen sein, die durch entsprechende Verfahrbewegungen am Portal eine Hochdruckreinigung der Seitenflächen sowie der Front- und Heckflächen des Fahrzeugs ermöglicht.

## Patentansprüche

1. Portalwaschvorrichtung für Fahrzeuge, insbesondere Kraftfahrzeuge, mit einer relativ zum Fahrzeug in dessen Längsrichtung verfahrbaren Portalanordnung (1, 2), mindestens einer an der Portalanordnung (1, 2) höhenverstellbar angeordneten Horizontal-Waschbürste (5, 6), mindestens einer an der Portalanordnung (1, 2) quer zu deren Bewegungsrichtung verfahrbaren Seiten-Waschbürste (10) und mindestens einer an der Portalanordnung (1, 2) angeordneten seitlichen Hochdruck-Wascheinrichtung (7), **dadurch gekennzeichnet, daß** die Hochdruck-Wascheinrichtung (7) zur Hochdruckreinigung der Seitenflächen und der Front- und Heckflächen des Fahrzeugs an mindestens einer Traverse (4) der Portalanordnung (1, 2) quer zur Bewegungsrichtung der Portalanordnung (1, 2) verfahrbar geführt ist.

2. Portalwaschvorrichtung nach Anspruch 1, **dadurch gekennzeichnet, daß** die Portalanordnung (1, 2) ein erstes Portal (1) und ein zweites Portal (2) enthält, von denen das eine die mindestens eine Seiten-Waschbürste (10) und das andere die mindestens eine seitliche Hochdruck-Wascheinrichtung (7) trägt.

3. Portalwaschvorrichtung nach Anspruch 2, **dadurch gekennzeichnet, daß** das erste Portal (1) und das zweite Portal (2) miteinander gekoppelt sind.

4. Portalwaschvorrichtung nach einem der Ansprüche 1 bis 3, **dadurch gekennzeichnet, daß** die seitliche Hochdruck-Wascheinrichtung (7) ein mit Düsen (16) versehenes vertikales Hochdruckrohr ist.

5. Portalwaschvorrichtung nach einem der Ansprüche 1 bis 4, **dadurch gekennzeichnet, daß** die seitliche Hochdruck-Wascheinrichtung (7) an einem Laufwagen (8) angeordnet ist, der über eine horizontale Führung (9) an der mindestens einen Traverse (4) der Portalanordnung (1, 2) motorisch verschiebbar geführt ist.

6. Portalwaschvorrichtung nach einem der Ansprüche 1 bis 5, **dadurch gekennzeichnet, daß** die seitliche Hochdruck-Wascheinrichtung (7) um ihre Längsachse drehbar ist.

7. Portalwaschvorrichtung nach einem der Ansprüche 1 bis 6, **dadurch gekennzeichnet, daß** an der Portalanordnung (1, 2) mindestens zwei quer zu deren Bewegungsrichtung verfahrbare Seiten-Waschbürsten (10) und mindestens zwei an der mindestens einen Traverse (4) der Portalanordnung (1, 2) quer zu deren Bewegungsrichtung verfahrbar geführte Hochdruck-Wascheinrichtungen (7) angeordnet sind.

8. Portalwaschvorrichtung nach Anspruch 7, **dadurch gekennzeichnet, daß** die seitlichen Hochdruckwascheinrichtungen (7) mindestens bis zur Mitte der Traverse (4) verfahrbar sind.

9. Portalwaschvorrichtung nach Ansprüche 7 oder 8 und 2, **dadurch gekennzeichnet, daß** an dem ersten Portal (1) und an dem zweiten Portal (2) eine Horizontalwaschbürste (5, 6) montiert ist und daß die Seiten-Waschbürsten (10) und die seitlichen Hochdruck-Wascheinrichtungen (7) zwischen den beiden Horizontal-Waschbürsten (5, 6) angeordnet sind.

10. Portalwaschvorrichtung nach Anspruch 2, **dadurch gekennzeichnet, daß** die mindestens eine Hochdruck-Wascheinrichtung (7) an dem ersten Portal (1) und die mindestens eine Seiten-Waschbürste (10) an dem zweiten Portal (2) angeordnet ist.

11. Portalwaschvorrichtung nach Anspruch 2, **dadurch gekennzeichnet, daß** die mindestens eine Hochdruck-Wascheinrichtung (7) an dem zweiten Portal (2) und die mindestens eine Seiten-Waschbürste (10) an dem ersten Portal (1) angeordnet ist.

12. Portalwaschvorrichtung nach einem der Ansprüche 1 bis 11, **dadurch gekennzeichnet, daß** an der Portalanordnung (1, 2) mindestens eine obere Hochdruck-Wascheinrichtung (14) zur Hochdruckreinigung der horizontalen Fahrzeugflächen einschließlich der Front- und Heckscheibe angeordnet ist.

## Claims

1. Portal washing device for vehicles, in particular motor vehicles, with a portal arrangement (1, 2) which can be made to travel relative to the vehicle in its longitudinal direction, at least one horizontal washing brush (5, 6) arranged so as to be adjustable in height on the portal arrangement (1, 2), at least one side washing brush (10) which can be made to travel on the portal arrangement (1, 2) transversely to its direction of movement, and at least one lateral high-pressure washing device (7) arranged on the portal arrangement (1, 2), **characterised in that** the high-pressure washing device (7) is guided so that it can be made to travel transversely to the direction of movement of the portal arrangement (1, 2) on at least one cross member (4) of the portal arrangement (1, 2) for high-pressure cleaning of the side surfaces and the front and rear surfaces of the vehicle.

2. Portal washing device according to claim 1, **characterised in that** the portal arrangement (1, 2) comprises a first portal (1) and a second portal (2), of which one carries the at least one side washing brush (10) and the other the at least one lateral high-pressure washing device (7).

3. Portal washing device according to claim 2, **characterised in that** the first portal (1) and the second portal (2) are coupled to one another.

4. Portal washing device according to one of claims 1 to 3, **characterised in that** the lateral high-pressure washing device (7) is a vertical high-pressure pipe provided with nozzles (16).

5. Portal washing device according to one of claims 1 to 4, **characterised in that** the lateral high-pressure washing device (7) is arranged on a trolley (8) which is guided by means of a horizontal guide (9) so as to be displaceable by motor on the at least one cross member (4) of the portal arrangement (1, 2).

6. Portal washing device according to one of claims 1 to 5, **characterised in that** the lateral high-pressure washing device (7) is rotatable about its longitudinal axis.

7. Portal washing device according to one of claims 1 to 6, **characterised in that** on the portal arrangement (1, 2) there are at least two side washing brushes (10) which can be made to travel transversely to its direction of movement, and at least two high-pressure washing devices (7) which are guided so that they can be made to travel on the at least one cross member (4) of the portal arrangement (1, 2) transversely to its direction of movement.

8. Portal washing device according to claim 7, **characterised in that** the lateral high-pressure washing devices (7) can be made to travel at least to the middle of the cross member (4).

9. Portal washing device according to claims 7 or 8 and 2, **characterised in that** a horizontal washing brush (5, 6) is mounted on the first portal (1) and on the second portal (2) and **in that** the side washing brushes (10) and the lateral high-pressure washing devices (7) are arranged between the two horizontal washing brushes (5, 6) .

10. Portal washing device according to claim 2, **characterised in that** the at least one high-pressure washing device (7) is arranged on the first portal (1) and the at least one side washing brush (10) is arranged on the second portal (2).

11. Portal washing device according to claim 2, **characterised in that** the at least one high-pressure washing device (7) is arranged on the second portal (2) and the at least one side washing brush (10) is arranged on the first portal (1).

12. Portal washing device according to one of claims 1 to 11, **characterised in that** at least one upper high-pressure washing device (14) is arranged on the portal arrangement (1, 2) for high-pressure cleaning of the horizontal surfaces of the vehicle including the front and rear screens.

## Revendications

1. Dispositif de portique de lavage pour véhicules, notamment pour véhicules automobiles, comprenant un système de portique (1, 2) mobile par rapport au véhicule dans la direction longitudinale de celui-ci, au moins une brosse de lavage horizontale (5, 6) disposée de façon réglable en hauteur sur le système de portique (1, 2), au moins une brosse de lavage latérale (10) mobile sur le système de portique (1, 2) transversalement à la direction de déplacement de celui-ci et au moins un système de lavage à haute pression (7) latéral disposé sur le système de portique (1, 2), **caractérisé en ce que** le système de lavage à haute pression (7) destiné au nettoyage à haute pression des surfaces latérales et des surfaces frontale et arrière du véhicule est guidé de façon mobile sur au moins une traverse (4) du système de portique (1, 2) transversalement à la direction de déplacement du système de portique (1, 2).

2. Dispositif de portique de lavage selon la revendication 1, **caractérisé en ce que** le système de portique (1, 2) contient un premier portique (1) et un second portique (2), parmi lesquels l'un porte une des brosses de lavages latérales (10) et l'autre porte un des systèmes de lavage à haute pression (7).

3. Dispositif de portique de lavage selon la revendication 2, **caractérisé en ce que** le premier portique (1) et le second portique (2) sont couplés l'un à l'autre.

4. Dispositif de portique de lavage selon l'une quelconque des revendications 1 à 3, **caractérisé en ce que** le système de lavage à haute pression (7) latéral est un tuyau à haute pression vertical pourvu de buses (16).

5. Dispositif de portique de lavage selon l'une quelconque des revendications 1 à 4, **caractérisé en ce que** le système de lavage à haute pression (7) latéral est disposé sur un chariot (8), qui est guidé en pouvant se déplacer de façon motorisée par l'intermédiaire d'un guidage horizontal (9) sur une des traverses (4) du système de portique (1, 2).

6. Dispositif de portique de lavage selon l'une quelconque des revendications 1 à 5, **caractérisé en ce que** le système de lavage à haute pression (7) latéral peut être amené en rotation autour de son axe longitudinal.

7. Dispositif de portique de lavage selon l'une quelconque des revendications 1 à 6, **caractérisé en ce qu'**au moins deux brosses de lavage latérales (10) mobiles transversalement à leur direction de déplacement et au moins deux systèmes de lavage à haute pression (7) guidés de façon mobile sur une des traverses (4) du système de portique (1, 2), transversalement à la direction de déplacement de celui-ci, sont disposés sur le système de portique (1, 2).

8. Dispositif de portique de lavage à portique selon la revendication 7, **caractérisé en ce que** les systèmes de lavage à haute pression (7) latéraux sont mobiles au moins jusqu'au centre de la traverse (4).

9. Dispositif de portique de lavage selon l'une quelconque des revendications 7 ou 8 et 2, **caractérisé en ce qu'**une brosse de lavage horizontale (5, 6) est montée sur le premier portique (1) et sur le second portique (2) et **en ce que** les brosses de lavage latérales (10) et les systèmes de lavage à haute pression (7) latéraux sont disposés entre les deux brosses de lavage horizontales (5, 6).

10. Dispositif de portique de lavage selon la revendication 2, **caractérisé en ce qu'**un des systèmes de lavage à haute pression (7) est disposé sur le premier portique (1) et une des brosses de lavage latérales (10) est disposée sur le second portique (2).

11. Dispositif de portique de lavage selon la revendication 2, **caractérisé en ce qu'**un des systèmes de lavage à haute pression (7) est disposé sur le second portique (2) et une des brosses de lavage latérales (10) est disposée sur le premier portique (1).

12. Dispositif de portique de lavage selon l'une quelconque des revendications 1 à 11, **caractérisé en ce qu'**au moins un système de lavage à haute pression supérieur (14) destiné au nettoyage à haute pression des surfaces horizontales et des pare-brise avant et arrière du véhicule est disposé sur le système de portique (1, 2).
